# EUROPÄISCHE PATENTSCHRIFT

(11) **EP 0 407 851 B1**
(45) Veröffentlichungstag und Bekanntmachung des Hinweises auf die Patenterteilung: **07.02.1996**
(21) Anmeldenummer: 90112593.0
(22) Anmeldetag: 02.07.1990
(51) Int. Cl.: H04J 3/16, H04J 3/07

(54) **Verfahren zur Durchschaltung von Multiplexsignalen über Cross-Connectoren**
Method for interconnecting multiplexed signals via cross-connectors
Méthode pour l'interconnexion de signaux multiplexés par des connecteurs de répartitions

(30) Priorität: 13.07.1989 DE 3923172
(43) Veröffentlichungstag der Anmeldung: 16.01.1991
(73) Patentinhaber: SIEMENS AKTIENGESELLSCHAFT, D-80333 München (DE)
(72) Erfinder: Pospischil, Reginhard, Dr.-Ing., D-8032 Gräfelfing (DE)

(56) Entgegenhaltungen:
- IEEE JOURNAL ON SELECTED AREAS IN COMMUNICATION. Bd. SAC-5, Nr. 1, Januar 1987, NEW YORK US Seiten 6 - 18; A. F. GRAVES ET AL.: 'An Experimental Cross-Connect System for Metropolitan Applications'
- NEC RESEARCH AND DEVELOPMENT. Bd. 92, Nr. 1, Januar 1989, TOKYO JP Seiten 81 - 88; Y. ROKUGO ET AL.: 'Digital Cross-Connect System NDC-A31'
- The International Symposium On Subscriber Loops And Services 1988 ; Boston, US 11-16 Sep. 1988 ; Seiten 174 - 178 ; G. Chopping et al. : ' TRANSMISSION PROTECTION AND INTERFACING IN THE SYNCHRONOUS LOCAL NETWORK'
- IEEE Global Telecommunications Conference & Exhibition; Hollywood, US 28. Nov. - 1. Dez. 1988; Band 2 Seiten 960 - 964 K. Maki et al. : ' IMPLEMENTATION AND APPLICATION OF EQUIPMENT WITH NETWORK NODE INTERFACE '
- IEEE Global Telecommunications Conference & Exhibition 1989 ; Dallas, US 27 - 30. Nov. 1989 ; Band 3 Seiten 1506 - 1510 H. UEDA ET AL. : ' NEW SYNCHRONOUS DIGITAL TRANSMISSION SYSTEM WITH NETWORK NODE INTERFACE
- IEEE Global Telecommunications Conference & Exhibition 1987; Tokyo, JP ; 15.- 18. Nov. 1987; Band 1 Seiten 485 - 489 N.B. SANDESARA et al. : ' SYNCHRONOUS OPTICAL NETWORK FORMAT AND TERMINAL APPLICATIONS '

## Beschreibung

Die Erfindung betrifft ein Verfahren zur Durchschaltung von Multiplexsignalen nach dem Oberbegriff des Patentanspruchs 1.

In dem digitalen Verbindungsnetz der "synchronen Digital-Hierarchie (SDH) nach den CCITT-Empfehlungen G.707, G.708 und G.709 werden die zu übertragenden Digitalsignale am Eingangsknoten zum synchronen Netz in spezielle Datenblöcke, sogenannte synchrone Container C-n durch positives Stopfen eingefügt. Jeder Container wird durch Hinzufügen eines Zusatzsignals (POH) zu einem virtuellen Container VC-n ergänzt. Die virtuellen Container werden periodisch übertragen. Das erste Byte eines virtuellen Containers wird durch einen Pointer angegeben, dessen zeitliche Lage im Übertragungsrahmen festgelegt ist. Als Übertragungsrahmen dient in der Regel der virtuelle Container einer höheren Hierarchiestufe. Ein virtueller Container VC-n bildet mit dem ihm zugeordneten Pointer eine "Tributary Unit" TU-n. Mehrere "Tributary Units" gleichen Aufbaus können wieder zu einer "Tributary Unit Group" TUG-n zusammengefaßt werden. In den oben genannten CCITT-Empfehlungen sind wörtlich nur die "Tributary Unit Groups" TUG-21 für die 1,5 Mbit/s-Hierarchie (USA) und die TUG-22 für die 2 Mbit/s-Hierarchie genannt, die u.a. in Europa üblich ist. In den Figuren der CCITT- Empfehlung G.709 sind auch "Tributary Unit Groups" höherer Ordnung zu sehen.

In einem Beitrag der France Telecom für CCITT mit dem Titel "Considerations about G.709 Multiplexing Structure" zur Tagung in Genf vom 19.-30.Juni 1989 werden die CCITT-Empfehlung zur Definition von höheren "Tributary Unit Groups" TUG-31 und TUG-32 verwendet.

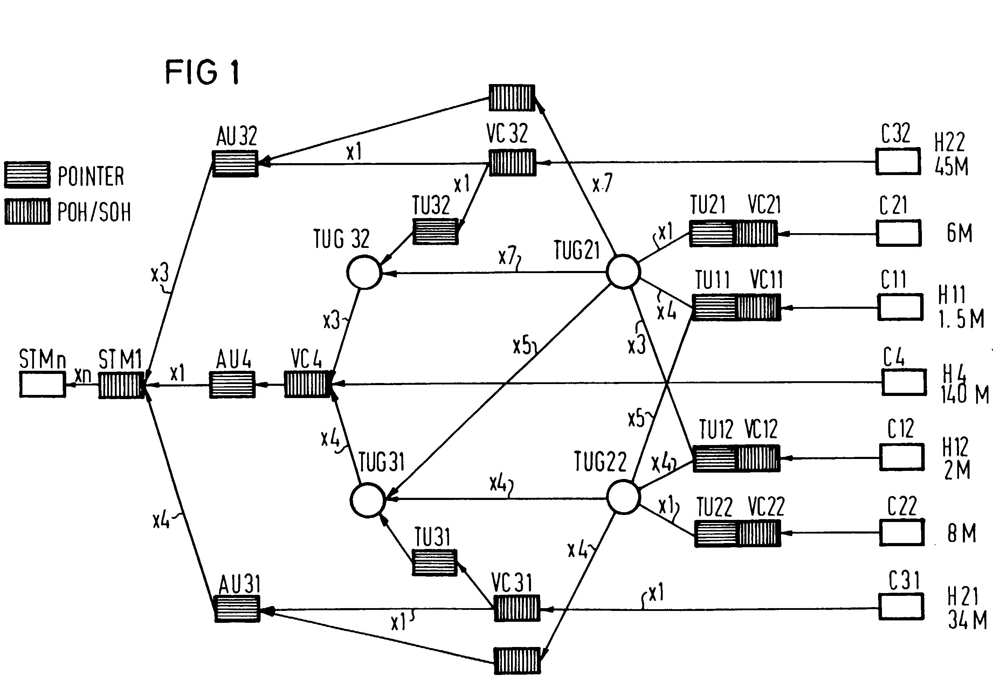

In Figur 1 ist der französische Vorschlag zur Bildung eines synchronen Übertragungssignals STM-1 dargestellt. Verschiedene, auf der rechten Seite angegebene plesiochrone Signale H11 bis H22 (M bedeutet hier Mbit/s) können über unterschiedliche Multiplexwege zu dem synchronen Übertragungssignal STM-1 zusammengefaßt werden. Die Pfeilrichtungen in Figur 1 geben hierbei jeweils die Richtung zu einem komplexeren Multiplexsignal bzw. zu einem Multiplexsignal einer höheren Ebene an. Auf beiden Seiten einer Digitalverbindung muß der gleiche Multiplexweg angewendet werden. In der oberen Hälfte sind die Multiplexwege für Signale der 1,5 Mbit/s-Hierarchie (USA) und in der unteren Hälfte die Multiplexwege der 2 Mbit/s-Hierarchie dargestellt. Der STM-1-Rahmen hat eine Periode von 8 KHz und weist 270 Spalten und 9 Zeilen auf, entsprechend 270 x 9 Bytes. Das Rahmenkennwort bestimmt hierbei direkt oder indirekt über weitere Pointer die Lage aller benötigten Pointer der zu übertragenden Datenblöcke.

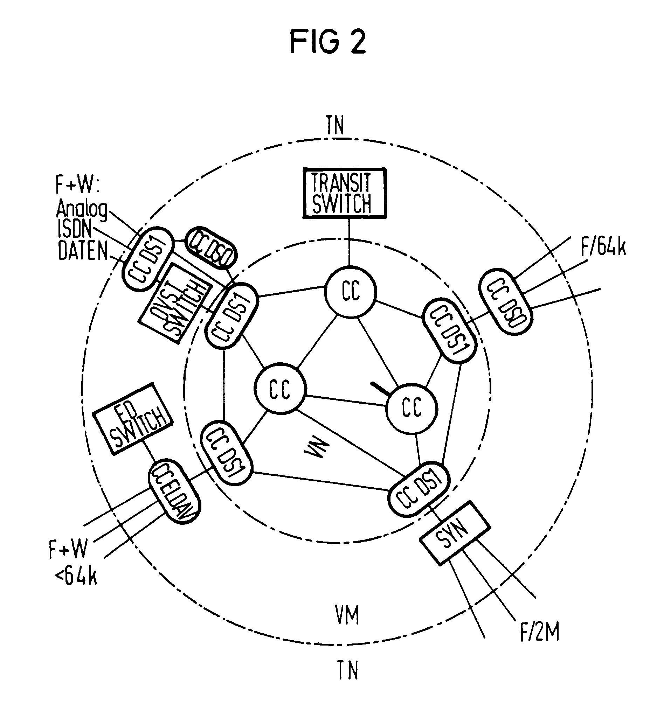

In dem Verbindungsleitungsnetz (Figur 2) sind sogenannte Cross-Connectoren (CC) vorgesehen, die es ermöglichen, Multiplexsignale über verschiedene Verbindungswege zu schalten. Die Cross-Connectoren können hierbei die Durchschaltung mittels eines mechanischen oder elektronischen Koppelfeldes vornehmen. Dies kann ein synchrones Raumkoppelfeld sein, aber auch ein synchrones Zeitschlitzkoppelfeld, ein zeitschlitzgekoppeltes Raumkoppelfeld oder eine Kombination hiervon. Als Teilnehmer sind hier im wesentlichen Fernsprechteilnehmer mit Fest- oder Wählverbindungen (F + W) angegeben, die direkt oder über eine Vermittlungsebene Zugang zum Verbindungsleitungsnetz haben.

Während bei der plesiochronen Hierarchie in jeder Hierarchie-Ebene (Multiplex-Ebene) Durchschaltungen oder Umlegungen vorgenommen werden können, sind in der synchronen Hierarchie zwischen den einzlnen Hierarchie-Stufen unterhalb des STM-1-Signals von 155,520 Mbit/s keine Schnittstellen genormt, wodurch ein Durchschalten und Umlegen zunächst nicht möglich ist.

Erwünschte Schaltebenen bei der 2 Mbit/s-Hierarchie wären für die Datenblöcke TU-12, TU-22, TUG-22, TU-31, TUG-31, AU-31 und AU-4 vorzusehen. Bei der 1,5 Mbit/s-Hierarchie wären die entsprechenden Schaltebenen für Datenblöcke TU-11, TU-21, TUG-21, TU-32, TUG-32, AU-32 und AU-4 erwünscht. Mit Ausnahme der Schaltebene AU-4 (Administrative Units, die aber nicht Gegenstand der Erfindung ist) benötigen die Schaltebenen für die 2 Mbit/s-Hierarchie und für die 1,5 Mbit/s-Hierarchie unterschiedliche Einrichtungen.

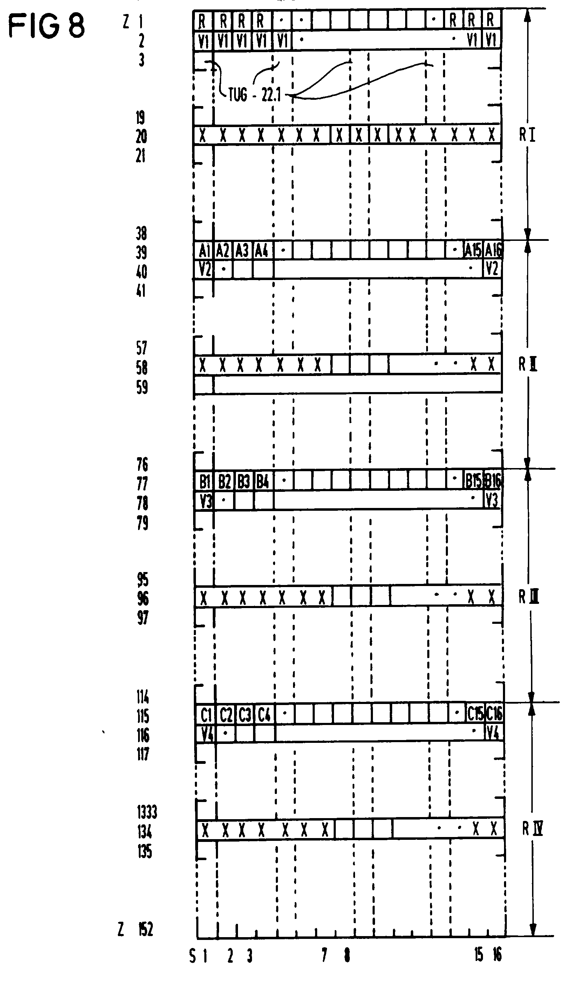

In "IEEE, Journal on Selected Areas in Communications", Juanary 1987, Vol. SAC-5, Number 1 sind verschiedene Cross-Connect-Systeme beschrieben. Bei dem in Figur 8 dargestellten Cross-Connector sind nach der Beschreibung verschiedene CrossConnect-Komplexe für unterschiedliche Geschwindigkeiten vorgesehen. Ein solches System ist nur mit erheblichen Schaltungsaufwand zu realisieren.

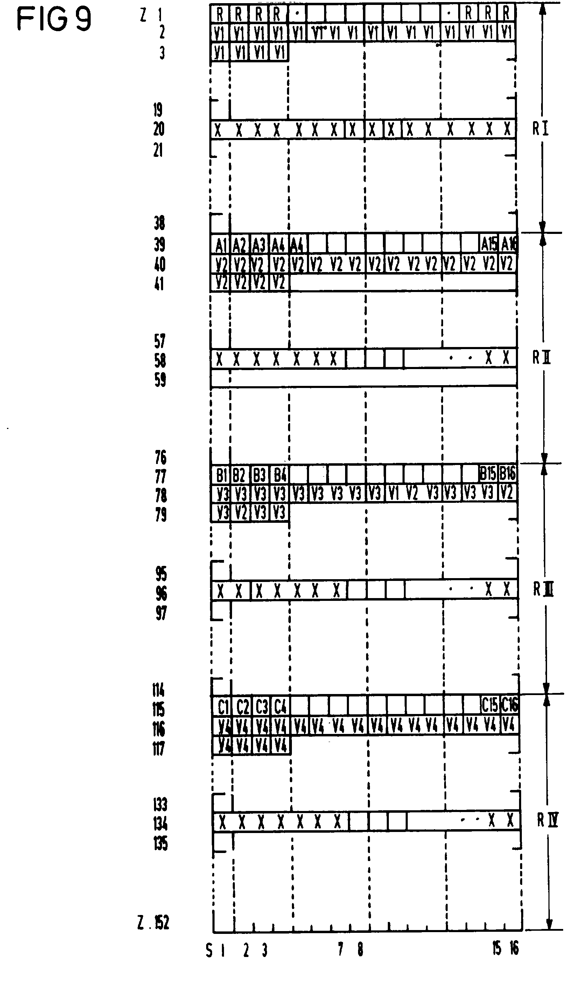

Bei dem in Figur 9 dargestellten Breitband-Cross-Connector wird ein Durchschalteformat verwendet, das Umsetzungen nicht mehr erfordert. Nach Figur 12 und der zugehörigen Beschreibung wird innerhalb des Cross-Connectors ein gemeinsames Durchschalteformat ETF verwendet, das jedoch insbesondere für die europäische Norm ungeeignet ist, und mit unterschiedlichen Taktfrequenzen durchgeschaltet wird. Auch ein solches Verfahren ist nur mit erheblichem Aufwand realisierbar.

Aufgabe der Erfindung ist es daher, ein Verfahren vorzusehen, das die Durchschaltung von Multiplexsignalen der synchronen Digitalhierarchie ermöglicht. Hierzu sind geeignete Pulsrahmen anzugeben.

Diese Aufgabe wird durch die im Anspruch 1 angegebenen Merkmale gelöst.

Vorteilhafte Weiterbildungen der Erfindung sind in den Unteransprüchen angegeben.

Vorteilhaft ist die Umsetzung der Multiplexsignale unterschiedlicher Ebenen in Cross-Connect-Datenblöcke, die dann in einen internen Pulsrahmen mit einer internen Pulsfrequenz eingefügt werden. Frequenzabweichungen zwischen Signalquellen und den Durchschaltepunkten werden durch Positiv-null-negativ-Stopfen ausgeglichen. Für alle Datenblöcke dieser Multiplexebene bzw. für eine entsprechende Anzahl von Datenblöcken einer unteren Ebene wird stets derselbe Überrahmen vorgesehen, wobei die Anfänge der Datenblöcke durch Pointer gekennzeichnet werden. Ausführungsbeispiele der Erfindung werden anhand von Figuren näher erläutert.

Es zeigen
- Figur 1: ein Multiplexschema,
- Figur 2: ein Prinzipschaltbild einer digitalen Netzstruktur,
- Figur 3: ein Umsetzungsschema für die verschiedenen Multiplexsignale in Signale des internen Pulsrahmens,
- Figur 4: einen Überrahmen für die 2 Mbit/s-Hierarchie,
- Figur 5: das Einfügen eines virtuellen Containers VC-31,
- Figur 6: die Rahmenaufteilung für Signale TU-12, TU-22, TUG-22 und TUG-31,
- Figur 7: die Anordnung von 16 TU-12 bzw. einer TUG-31,
- Figur 8: die Anordnung von 4 TUG-22,
- Figur 9: die Anordnung von Pointern für 5 x TU-11,
- Figur 10: die Anordnung von 5 TUG-21 in eine TUG-31 und
- Figur 11: den Überrahmen für die 1,5 Mbit/s-Hierarchie.

In Figur 1 ist die Multiplexstruktur sowohl für die 2 Mbit/s-Hierarchie als auch für die 1,5 Mbit/s-Hierarchie dargestellt. Die Angabe 2M bedeuted hierbei eine Datenrate von ca. 2 Mbit/s. Die virtuellen Container C werden periodisch übertragen und zu größeren Datenblöcken zusammengefaßt. Hierbei sind mehrere Möglichkeiten gegeben. Beispielsweise können vier Tributary Units TU-12 eine Tributary Unit Group TUG-22 bilden oder eine TU-22 wird in eine TUG-22 eingefügt. Weitere Beispiele hierzu sind der Figur 1 und den eingangs erwähnten CCITT-Empfehlungen zu entnehmen.

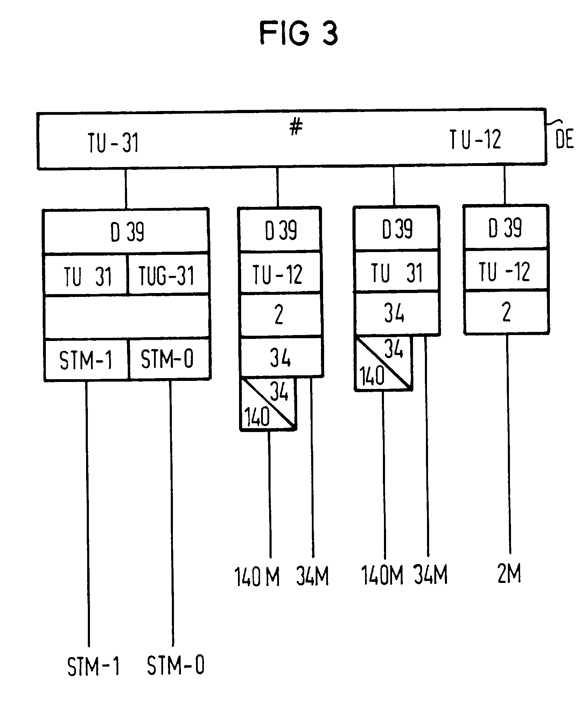

In Figur 3 ist ein Prinzipschaltbild zum Umsetzen der empfangenen Signale in durchschaltbare Signale DS 39 (DS 39 Digitalsignal) der Durchschaltebene DE dargestellt. Hierbei werden beispielsweise mehrere Signale (2Mbit/s) zu dem DS 39-Signal, auf das später genauer eingegangen wird, zusammengesetzt, während Signale mit höherer Datenrate in mehrere DS 39-Signale zerlegt oder in DS 39-Signale umgewandelt werden. Das in Figur 3 dargestellte Schema gilt natürlich ebenso für die Zusammenfassung und Aufteilung von durchgeschalteten DS 39-Signale. Das STM-0-Signal ist noch nicht festgelegt. Es hat ein Viertel der Datenrate des STM-1-Signals.

Bei den gewünschten Schaltebenen besteht folgendes Problem: Sämtliche Formen der Datenblöcke sind nur in einen festen Rahmen eingeordnet weiterverarbeitbar. Alle Signale unterschiedlicher Herkunft müssen daher auf die Netzknotentakte synchronisiert werden.

Die empfangenen Datenblöcke werden in einen Überrahmen unter Phasen- und Frequenzausgleich (Pufferspeicher, Pointer-Aktion (d.h. Änderung der vom Pointer angegebenen Abstandsadresse)) und durch Positiv-null-negativ-Stopfen eingeordnet. Beim Durchschalten müssen alle neu im Überrahmen zusammengefaßten Datenblöcke wie TU's, TUG's bzw. AU's in die ihnen dann jeweils zugeordneten Zeitschlitze eingeordnet werden. Alle Pointer müssen hierzu unter Beachtung der Überrahmenstruktur in hierfür vorgesehenen Zeitschlitzen angeordnet sein. Jedem durchzuschaltenen Signal muß zur Koppelwegüberwachung außerdem eine Kennung beigefügt werden.

Sowohl für die 2 Mbit/s-Hierarchie als auch für die 1,5 Mbit/s-Hierarchie ist jeweils eine geeignete Rahmenstruktur zu finden, die es gestattet, alle TU's bzw. TUG's über jeweils ein einziges zeitschlitzgesteuertes Koppelfeld durchzuschalten.

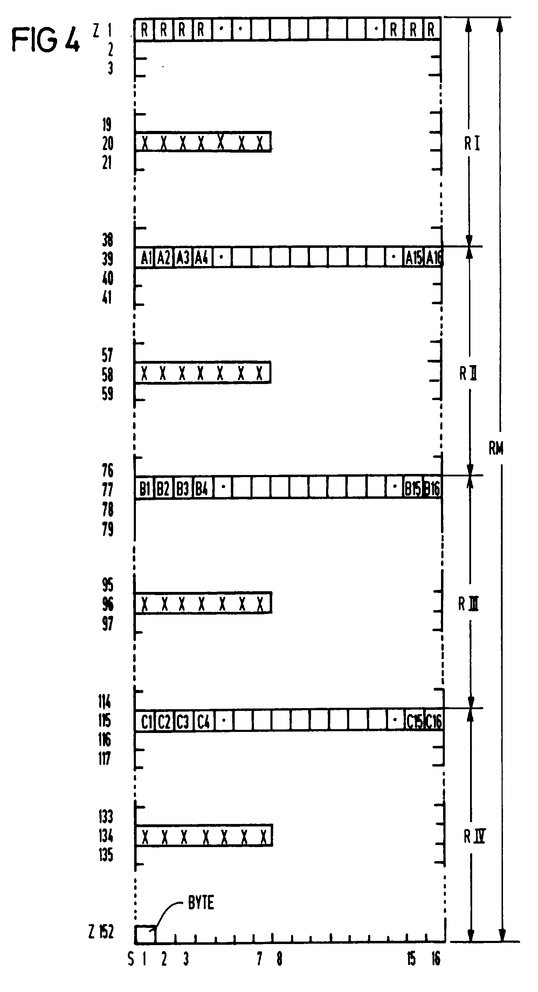

In Figur 4 ist der erfindungsgemäße Überrahmen für die 2Mbit/s-Hierarchie dargestellt. Der Überrahmen RM weist - in zweidimensionaler Darstellung - 152 Zeilen mit jeweils 16 Spalten auf. Er ist in 4 Rahmen RI bis RIV unterteilt, die jeweils 38 Zeilen mit 16 Spalten, also 38 x 16 Bytes enthalten. Die Übertragung erfolgt zeilenweise, beginnend mit Byte 1 in Zeile Z1 und Spalte S1. Bei einer Überrahmenperiode von 2 kHz beträgt die Übertragungsrate 38 912 kbit/s (19 x 20 48 kbit/s). Dieses Übertragungssignal ist das mit DS 39 bezeichnete Signal.

In der ersten Zeile Z1 des ersten Rahmens RI wird eine Rahmenkennung RRR... übertragen. Die ersten Zeilen der übrigen Rahmen RII bis RIV und die ersten 7 Bytes einer zusätzlichen Zeile - hier jeweils die 20. Zeile jedes Rahmens - stehen für Überwachung- und Managementaufgaben (Daten A, B, C und x) zur Verfügung. Die Netto-Übertragungskapazität jedes Rahmens beträgt somit 65 x 9 Bytes. Dies entspricht exakt der Übertragungsrate einer Tributary Unit TU-31.

Zur Übertragung einer TUG-31 - zusammengesetzt aus vier TUG-22 oder aus 16 TU-12 - werden nur 64 x 9 Bytes benötigt. Alle in den Überrahmen einfügbaren Datenblöcke werden hier als Cross-Connect-Datenblöcke bezeichnet. In den vorstehenden Fällen wird in der Zusatzzeile (hier jede 20. Zeile eines Rahmens) keine Übertragungskapazität benötigt. Um für alle Signale denselben Rahmenaufbau zu erhalten, wird diese Zeile jedoch stets beibehalten.

Mit der Rahmenkennung in Zeile 1 des Überrahmens bzw. des Rahmens RI ist die Rahmenstruktur mit den Zusatzzeilen und den Zeilen für Überwachung und Management festgelegt. Gleichzeitig wird mit der Rahmenkennung die Lage der Pointer im Rahmen bzw. Überrahmen (willkürlich) festgelegt.

Ein TU-31-Pointer besteht aus drei Bytes V1, V2 und V3, die in jedem der Rahmen RI-RIV dieselbe Lage einnehmen. Welche drei Zeitschlitze verwendet werden, muß nur dann genormt werden, wenn das in den Rahmen gepackte Signal über eine externe Schnittstelle geführt werden soll. Die Bytes V1 und V2 geben die Lage der zugeordneten Datenblocks an. V3 wird als "Action-Byte" für Stopfoperationen verwendet. In den folgenden Beispielen sind die TU-31-Pointer in den Zeitschlitzen 8, 9 und 10 der Zusatzzeilen angeordnet. Bei der Tributary Unit Group TUG-22 besteht der Pointer aus 4 aneinandergereihten TU-12-Pointern; bei der TU-31 besteht der Pointer aus 16 aneinandergereihten TU-12-Pointern, jeder einzelne Pointer besteht widerum aus vier Bytes V1-V4, welche in dieser Reihenfolge auf die Rahmen RI-RIV verteilt sind. Das bedeutet, daß alle 16 Bytes V1 einer TUG-31 eine volle Zeile im Rahmen RI in Anspruch nehmen; die 16 Bytes V2 eine Zeile im Rahmen RII. Entsprechendes gilt für die Bytes V3 und V4 in dem Rahmen RIII und RIV. Welche Zeilennummer in den Rahmen verwendet wird, ist im Prinzip gleichgültig. Der übersichtlichen Darstellung wegen sind in den folgenden Beispielen die Bytes jeweils in der 2. Zeile jedes Rahmens angeordnet.

Vorzugsweise werden die ersten Zeilen der Rahmen RII und RIII für Signaladressen zur Überwachung des Koppelweges verwendet, während die Bytes der 1. Zeile des Rahmens RIV zur Qualitätsüberwachung der Koppelwege verwendet werden können.

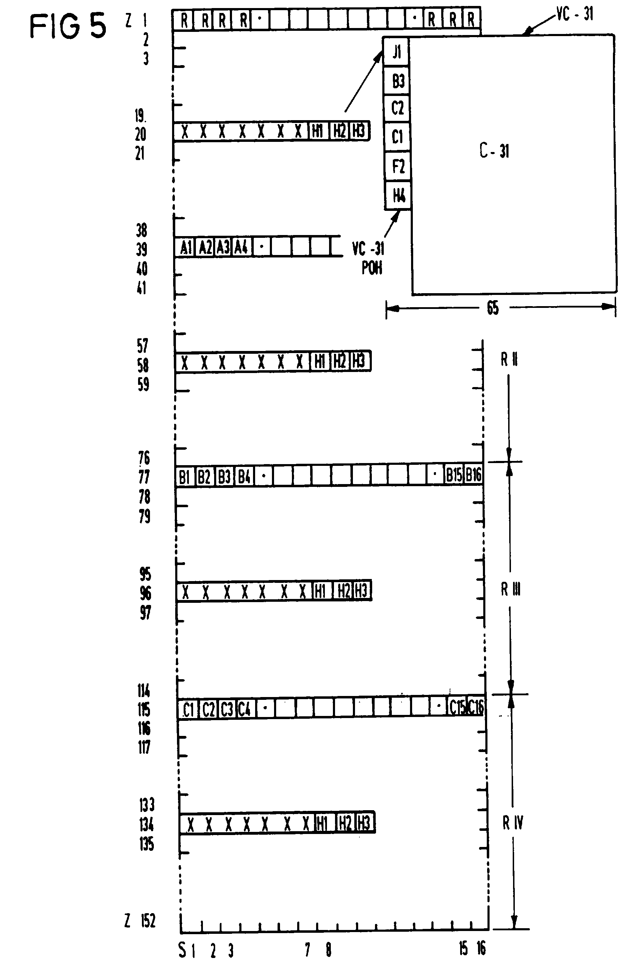

In Figur 5 ist die Einfügung einer TU-31 in den Überrahmen dargestellt. Der zugehörige Pointer H1, H2, H3 ist in drei Bytes (Spalte 8, 9 und 10) der Zusatzzeile eingeordnet. Der Pointer bestimmt die Position des ersten Bytes (J1) des virtuellen Containers VC-31.

Insgesamt können vier Datenblöcke eines TU-31-Signals in den Überrahmen RM eingefügt werden.

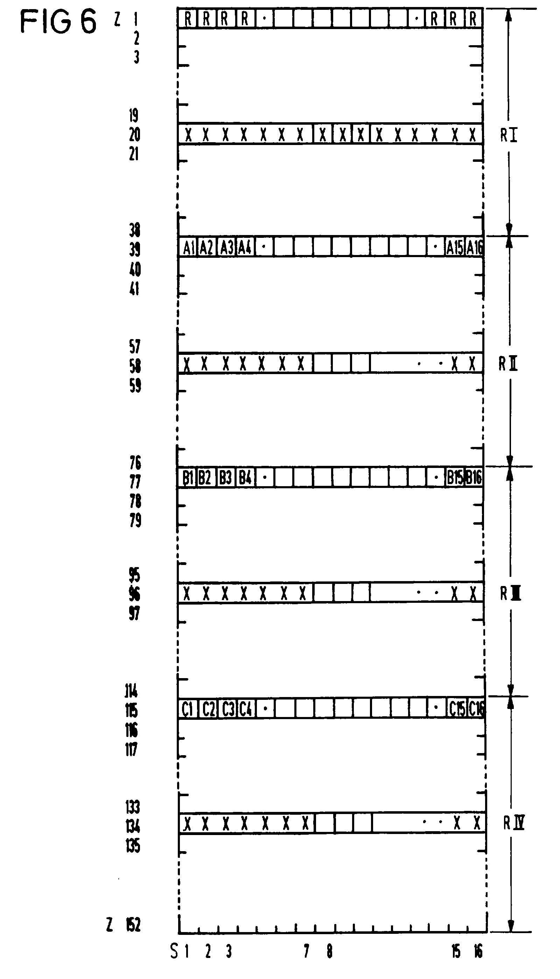

In Figur 6 ist die Aufteilung des Überrahmen für Signale TU-12, TU-22, TUG-22 und TUG-31 dargestellt. Für diese Signale bleiben die Bytes der Zusatzzeilen 20 jedes Rahmens unbenutzt. Die dann zur Verfügung stehende Übertragungskapazität beträgt 36 x 16 Bytes = 64 x 9 Bytes je Rahmen. Diese Kapazität ist ausreichend zur Einfügung von sechszehn TU-12, vier TUG-22 oder einer TUG-31.

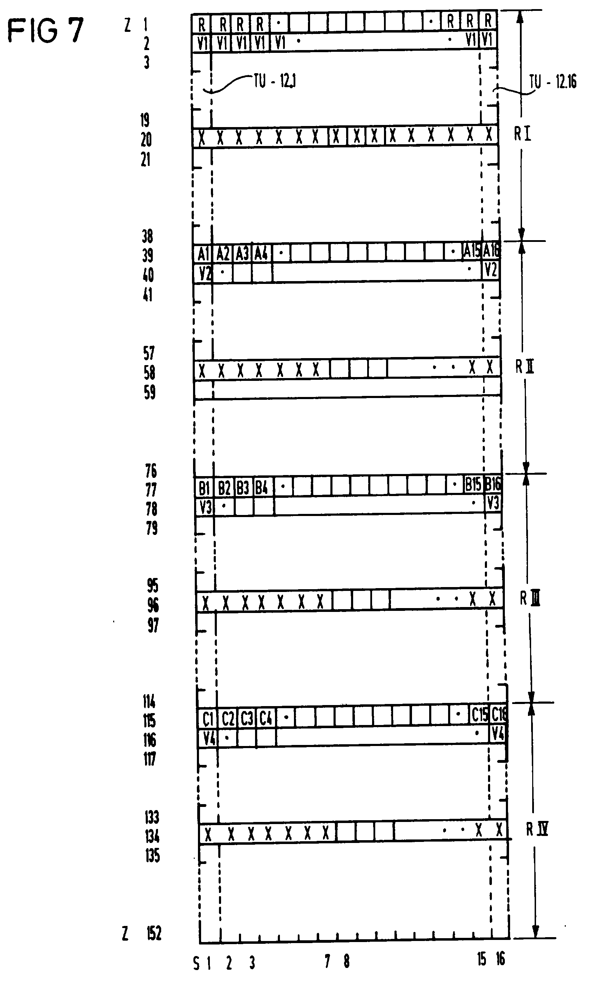

Figur 7 zeigt die Anordnung von 16 TU-12 (bzw. einer TUG-31). Jede Spalte dient der Übertragung einer TU-12. So wird in der ersten Spalte S1 die TU-12.1 und in der 16. Spalte S16 die TU-12.16 übertragen. Die jeweils zugehörigen Pointer V1-V4 sind jeweils in der zugehörigen Spalte in den zweiten Zeilen der Rahmen RI bis RIV angeordnet.

Figur 8 zeigt die Anordnung von vier TUG-22. Für jede TUG-22 werden 4 Spalten benötigt, wobei der ersten TUG-22 die Spalten S1, S5, S9 und S13 zugeordnet sind, der zweiten TUG-22 die Spalten S2, S6, S10 und S14, der dritten TUG-22 die Spalten S3, S7, S11 und S15 und der vierten TUG-22 die restlichen Spalten. Die erste TUG-22.1 ist in Figur 8 durch Punktieren der entsprechenden Spalten eingezeichnet. Für die Übertragung von Tributary Units TU-22 gilt dieselbe Spaltenzuordnung.

Bevor noch weitere Möglichkeiten zur Einfügung weiterer Cross-Connect-Datenblöcke abgehandelt werden, soll kurz auf das Problem der Durchschaltung eingegangen werden. Diese kann nur erfolgen, nachdem die einheitlichen synchronen Datenblöcke mit dem Überrahmen RM gebildet wurden. Durchgeschaltet wird entweder der Überrahmen komplett, einzelne Spalten (TU-12) oder mehrere Spalten (TU-22), die zusätzliche Information über Rahmenkennung, Koppelwegadresse und Überwachungskriterium (entsprechend den zusätzlichen Zeilen des Überrahmens) enthalten. Z.B. erhöht sich bei der Durchschaltung einer TU-12 die Anzahl der Bytes von 144 auf 152 und bei einer TU-22 von 576 auf 604. Zur Aussendung über das Verbindungsleitungsnetz wurden die durchgeschalteten Datenblöcke jeweils zu einem STM-1-Signal zusammengefaßt.

Nach CCITT G.709, Figur 5.11 kann eine TUG-22 anstatt aus 4 x TU-12 auch aus 5 x TU-11 gebildet werden. In diesem Fall benötigt man jeweils fünf anstelle von vier Pointern. In Figur 9 sind beispielsweise die fünften Pointer jeweils in den ersten vier Bytes der dritten Zeile eines jeden Rahmens angeordnet, in die jeweils die ersten, zweiten, dritten und vierten Bytes der Pointer eingeschrieben werden. Bei gemischter Belegung entfallen die entsprechenden Pointer. In Figur 9 sind in allen TUG-22 jeweils fünf TU-11 enthalten.

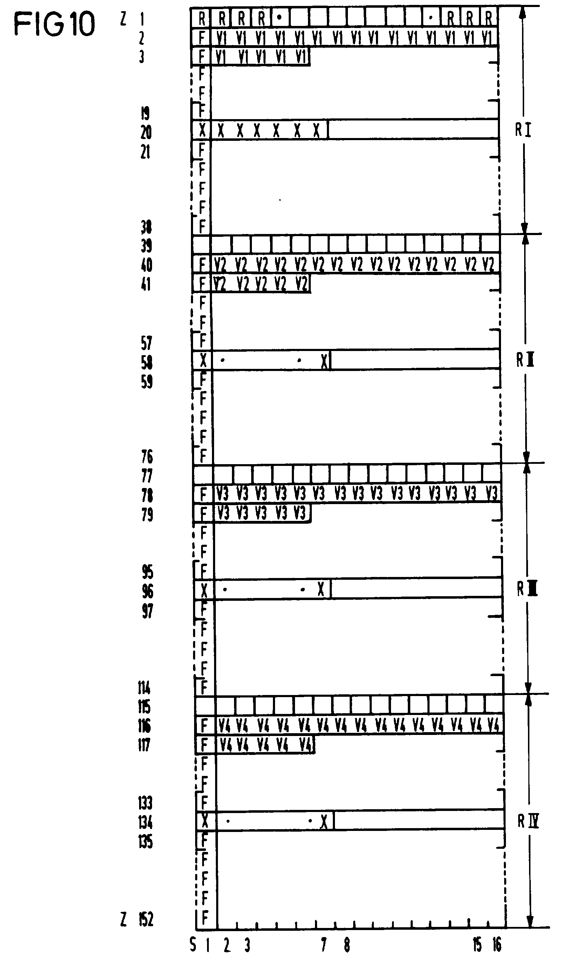

In Figur 10 ist die Einfügung von fünf TUG-21 in den Überrahmen RM zur Einfügung in eine TUG-31 dargestellt. Beim Übergang von einer Hierarchie in die andere, hier von 1,5 Mbit/s in 2 Mbit/s wird immer der Überrahmen - hier RM - der Hierarchie verwendet, in den eingefügt wird. Hier sind die Informationsbytes der ersten Spalte auf einen konstanten Wert gesetzt (Fixed Stuff). Die Pointer sind jeweils auf 2 Zeilen eines Rahmens verteilt.

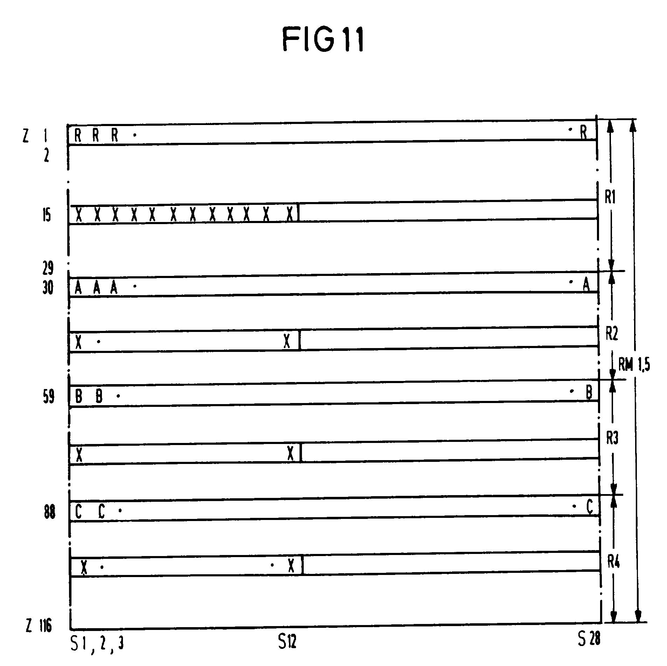

Für die 1,5 Mbit/s-Hierarchie läßt sich ein ähnlicher Überrahmen RM 1,5 nach Figur 11 aufbauen; hier besteht jeder Überrahmen aus vier Rahmen R1-R4. Ein Rahmen besteht bei Verwendung nur einer Zusatzzeile aus insgesamt 29 Zeilen und 28 Spalten, d.h. 29 x 28 Bytes. Je Überrahmen sind deshalb 116 x 28 Bytes bei einer Überrahmenperiode von 2 kHz zu übertragen. Die Übertragungsrate beträgt 51 968 kbit/s (29 x 1792 kbit/s). Dieses Signal wird DS 52 genannt. Als Zusatzzeile wird hier vorzugsweise die Zeile 15 verwendet. Die Zeile Z1 vom Rahmen R1 erhält die Rahmenkennung RR... Jeweils die erste Zeile der Rahmen R2 und R3 wird zur Übertragung von Koppelfeldadressen verwendet, und die erste Zeile des Rahmens R4 wird zur Übertragung von Qualitätsmerkmalen benutzt. Dieser Überrahmen kann zur Übertragung einer TU-32 oder einer TUG-32, von sieben TUG-21 oder von 28 TU-11 verwendet werden.

Wie bei den Rahmen für die 2 Mbit/s-Hierarchie werden zur Übertragung von 28 TU-11 oder sieben TUG-21 oder einer TUG-32 die Zusatzzeilen nicht zur Informationsübertragung benützt. Auch hier nehmen dann die Pointerwerte V1, V2, V3 und V4 jeweils eine ganze Zeile gleicher Position in den Rahmen R1 bis R4 ein. Für die Übertragung einer TU-32 werden dagegen 12 Bytes der Zusatzzeile eines jeden Rahmens benötigt. Anstelle einer TUG-21 können auch drei TU-12 übertragen werden.

Mit den beiden Überrahmen für die 2 Mbit/s-Hierarchie und die 1,5 Mbit/s-Hierarchie ist es möglich, für jede der beiden Hierarchien einen Cross-Connector aufzubauen, der mit seinem Koppelfeld in der Lage ist, eine TUG-31 bzw.TUG-32 als ganzes oder unterteilt in TUG-22 bzw. TUG-21 oder unterteilt in TUG-22 und TU-12 bzw. TUG-21 und TU-11 durchzuschalten. Dabei ist der Cross-Connector für die 2 Mbit/s auch in der Lage 1 bis 4 TUG-22 einer TUG-31 durchzuschalten, auch wenn diese aus je 5 TU-11 aufgebaut sind. Für die 1,5 Mbit/s-Hierarchie gilt entsprechend die Durchschaltung von 1 bis 7 TUG-21 oder einer TUG-32, auch wenn diese drei TU-12 enthält.

Außerdem ist es möglich, anstelle einer TUG-31 fünf TUG-21 durchschalten. Da zur Zeit weitere TUGs nicht festgelegt sind, ist deren Durchschaltung nicht möglich.

Alle genannten Schaltmaßnahmen benötigen keinen Eingriff in die Rahmenstruktur. Mit der Verwendung von 9 Bytes der Zusatzzeile je Rahmen zur Signalübertragung bei der 2 Mbit/s-Hierarchie lassen sich auch TU-31 bzw. AU-31 über das Koppelfeld durchschalten. Die AU-31 wird als "Administrativ Unit" bezeichnet.

Für die 1,5 Mbit/s-Hierarchie lassen sich bei Verwendung von 12 Bytes der Zusatzzeilen auch TU-32 bzw. AU-32 über das Koppelfeld durchschalten. Die Pointer können dann an die 12 Bytes der Zusatzzeile angefügt werden. Die genaue Struktur der durchzuschaltenden Cross-Connect-Datenblöcke ist hierbei jeweils den angegebenen Literaturstellen zu entnehmen.

## Patentansprüche

1. Verfahren zum Durchschalten von Multiplexsignalen über Cross-Connectoren mit Hilfe eines gleichbleibenden Rahmenformats,
**dadurch gekennzeichnet,**
daß Datenblöcke unterschiedlicher Multiplexebenen in Cross-Connect-Datenblöcke (TU-12, TU-22, TUG-22, TU-21, TU-32, TUG-32) umgesetzt werden,
daß die Cross-Connect-Datenblöcke in einen festen Überrahmen (RM) eingefügt werden, der (in zweidimendionaler Darstellung) 152 Zeilen mit jeweils 16 Spalten entsprechend 152 x 16 Bytes bei der 2 Mbit/s-Hierarchie umfaßt und eine konstante Rahmenfrequenz aufweist,
daß der Überrahmen in vier Rahmen (RI bis RIV) aufgeteilt ist,
daß feste Zeitschlitze zur Aufnahme von Pointern (V1, V2, ...) vorgesehen sind, die den Beginn der Cross-Connect-Datenblöcke festlegen,
und daß Frequenzabweichungen zwischen externen Datensignalen und dem Überrahmen (RM) durch Stopfen ausgeglichen werden.

2. Verfahren nach Anspruch 1,
**dadurch gekennzeichnet,**
daß in der ersten Zeile (Z1) des ersten Rahmens (RI) eine Rahmen-Kennung (RR...) übertragen wird, daß jeweils eine Zeile (Z39, Z77, Z115) der übrigen Rahmen (RII, RIII, RIV) und jeweils 7 Bytes einer Zusatzzeile (Z20, Z58, Z98, Z141) jedes Rahmens (RI bis RIV) für Sonderaufgaben zur Verfügung stehen.

3. Verfahren nach Anspruch 2,
**dadurch gekennzeichnet,**
daß beim Einfügen von 4 Cross-Connect-Datenblöcken, die virtuellen Containern VC-31 entsprechen, jeweils 3 Bytes an einer fest vorgegebenen Stelle jedes Rahmens (RI bis RIV) (Z20, Z58, Z96, Z134; S8, S9, S10) die Pointer (H1, H2, H3) aufnehmen.

4. Verfahren nach Anspruch 2,
**dadurch gekennzeichnet,**
daß beim Einfügen von Cross-Connect-Datenblöcken TU-12, TU-22, TUG-22, TUG-31 die Zusatzzeilen (Z20, Z58, Z96, Z134) jedes Rahmens nicht zur Übertragung von Nutzdaten verwendet werden.

5. Verfahren nach Anspruch 4,
**dadurch gekennzeichnet**,
daß bei der Einfügung von Cross-Connect-Datenblöcken TU-22, TUG-22, TUG-31 oder TU-12 eine Zeile jedes Rahmens (RI bis RIV) zur Übertragung der jeweils spaltenweise zugeordneten 4 Bytes (V1, V2, V3, V4) langen Pointern verwendet wird und daß die Übertragung der Cross-Connect-Datenblöcke jeweils durch Übertragung einer Spalte (V1, V2,....) oder mehrerer Spalten eines Überrahmens (S1 + S5 + S9 + S13) erfolgt.

6. Verfahren nach Anspruch 4,
**dadurch gekennzeichnet,**
daß bei der Übertragung von Cross-Connect-Datenblöcken TUG-22, die jeweils 5 x TU-11 enthalten, jeweils eine Zeile und vier Bytes einer weiteren Zeile jedes Rahmens (RI bis RIV) zum Einfügen der Pointer vorgesehen sind.

7. Verfahren nach Anspruch 4,
**dadurch gekennzeichnet**,
daß bei der Einfügung von fünf Cross-Connect-Datenblöcken TUG-21 die Informationsbits einer Spalte (S1) auf einen festen Wert (F) gesetzt werden.

8. Verfahren zum Durchschalten von Multiplexsignalen über Cross-Connectoren mit Hilfe eines gleichbleibenden Rahmenformats,
**dadurch gekennzeichnet,**
daß Datenblöcke unterschiedlicher Multiplexerebenen in Cross-Connect-Datenblöcke (TU-12, TU-11, TU-21, TU-32, TUG-32) umgesetzt werden,
daß die Cross-Connect-Datenblöcke in einen festen Überrahmen (RM 1,5) eingefügt werden, der (in zweidimensionaler Darstellung) 116 Zeilen mit jeweils 28 Spalten bei der 1,5 Mbit/s-Hierarchie umfaßt und eine konstante Rahmenfrequenz aufweist,
daß der Überrahmen (R 1,5) in vier Rahmen (R1, R2, R3, R4) aufgeteilt ist,
daß das Rahmenkennungswort in der ersten Zeile (Z1) des ersten Rahmens (R1) übertragen wird,
daß jeweils eine Zeile (Z30, Z59, Z88) der weteren Rahmen (R2, R3, R4) für Sonderaufgaben zur Verfügung steht, daß feste Zeitschlitze zur Aufnahme von Pointern (H1, H2, H3, ...; V1, V2, V3, ...) vorgesehen sind, die den Beginn der Cross-Connect-Datenblöcke festlegen, und
daß Frequenzabweichungen zwischen externen Datensignalen und dem Überrahmen (RM) durch Stopfen ausgeglichen werden.

9. Verfahren nach Anspruch 8,
**dadurch gekennzeichnet**,
daß beim Einfügen von Cross-Connect-Datenblöcken 1 x TUG-32, 7 x TUG-21 (oder hierfür jeweils drei TUG-12) oder 28 x TU-11 jeweils eine Zusatzzeile (Z15, Z44, Z73, Z102) jedes Rahmens (R1 bis R4) nicht zur Informationsübertragung benutzt wird.

10. Verfahren nach Anspruch 9,
daß beim Einfügen von Cross-Connect-Datenblöcken TU-32 jeweils 12 Bytes der Zusatzzeile (Z15, Z44, Z73, Z102) zur Informationsübertragung verwendet werden.

## Claims

1. Method for the through-cornection of multiplex signals via cross-cornectors with the aid of a constant frame format, characterized
in that data blocks of different multiplexing levels are converted into cross-cornect data blocks (TU-12, TU-22, TUG-22, TU-21, TU-32, TUG-32),
in that the cross-connect data blocks are inserted into a fixed superframe (RM) which comprises (in a two-dimensional representation) 152 rows each having 16 columns corresponding to 152 x 16 bytes for the 2 Mbit/s hierarchy and has a constant frame frequency,
in that the superframe is divided into four frames (RI to RIV),
in that there are provided fixed time slots for accommodating pointers (V1, V2, ...) which define the beginning of the cross-connect data blocks,
and in that frequency deviations between external data signals and the superframe (RM) are compensated for by stuffing.

2. Method according to Claim 1, characterized in that a frame identifier (RR...) is transmitted in the first row (Z1) of the first frame (RI), and in that in each case one row (Z39, Z77, Z115) of the remaining frames (RII, RIII, RIV) and in each case 7 bytes of a supplementary row (Z20, Z58, Z98, Z141) of every frame (RI to RIV) are available for special tasks.

3. Method according to Claim 2, characterized in that when 4 cross-connect data blocks corresponding to virtual containers VC-31 are inserted, in each case 3 bytes at a permanently prescribed location of every frame (RI to RIV) (Z20, Z58, Z96, Z134; S8, 89, S10) accommodate the pointers (H1, H2, H3).

4. Method according to Claim 2, characterized in that when cross-connect data blocks TU-12, TU-22, TUG-22, TUG-31 are inserted, the supplementary rows (Z20, Z58, Z96, Z134) of every frame are not used for transmitting useful data.

5. Method according to Claim 4, characterized in that when cross-connect data blocks TU-22, TUG-22, TUG-31 or TU-12 are inserted, one row of every frame (RI to RIV) is used for transmitting the pointers which are in each case 4 bytes (V1, V2, V3, V4) long and are assigned in a column-by-column manner, and in that the cross-connect data blocks are in each case transmitted by transmitting one column (V1, V2, ...) or a plurality of columns of a superframe (S1 + S5 + S9 + S13).

6. Method according to Claim 4, characterized in that when cross-connect data blocks TUG-22 which each contain 5 x TU-11 are transmitted, in each cane one row and four bytes of a further row of every frame (RI to RIV) are provided for the insertion of the pointers.

7. Method according to Claim 4, characterized in that when five cross-connect data blocks TUG-21 are inserted, the information bits of one column (S1) are set to a fixed value (F).

8. Method for the through-connection of multiplex signals via cross-connectors with the aid of a constant frame format, characterized
in that data blocks of different multiplexing levels are converted into cross-connect data blocks (TU-12, TU-11, TU-21, TU-32, TUG-32),
in that the cross-connect data blocks are inserted into a fixed superframe (RM 1.5) which comprises (in a two-dimensional representation) 116 rows each having 28 columns for the 1.5 Mbit/s hierarchy and has a constant frame frequency,
in that the superframe (R 1.5) is divided into four frames (R1, R2, R3, R4),
in that the frame identification word is transmitted in the first row (Z1) of the first frame (R1),
in that in each case one row (Z30, Z59, Z88) of the further frames (R2, R3, R4) is available for special tasks,
in that there are provided fixed time slots for accommodating pointers (H1, H2, H3, ..., V1, V2, V3 ...) which define the beginning of the cross-connect data blocks, and in that frequency deviations between external data signals and the superframe (RM) are compensated for by stuffing.

9. Method according to Claim 8, characterized in. that when cross-connect data blocks 1 x TUG-32, 7 x TUG-21 (or for this in each case three TUG-12) or 28 x TU-11 are inserted, in each case one supplementary row (Z15, Z44, Z73, Z102) of every frame (R1 to R4) is not used for transmitting information.

10. Method according to Claim 9, characterized in that when cross-connect data blocks TU-32 are inserted, in each case 12 bytes of the supplementary row (Z15, Z44, Z73, Z102) are used for transmitting information.

## Revendications

1. Procédé d'interconnexion de signaux multiplex par l'intermédiaire de sous-répartiteurs, à l'aide d'un format de trame constant, caractérisé par le fait
que l'on convertit des blocs de données de plans différents de multiplexage en des blocs de données de sous-répartition (TU-12, TU-22, TUG-22, TU-21, TU-32, TUG-32),
on introduit les blocs de données de sous-répartition dans une super-trame fixe (RM), qui comprend (selon une représentation bidimensionnelle) 152 lignes comportant chacune 16 colonnes, suivant 152 x 16 octets, dans le cas de la hiérarchie à 2M bits/s et a une fréquence de trame constante,
la super-trame est divisée en quatre trames (RI à RIV),
il est prévu des créneaux temporels fixes pour la réception de pointeurs (V1,V2,...), qui fixent le début des blocs de données de sous-répartition, et
on compare, par bourrage, des écarts en fréquence entre des signaux de données externes et la super-trame (RN).

2. Procédé suivant la revendication 1, caractérisé par le fait que l'on transmet une identification de trame (RR...) dans la première ligne (Z1) de la première trame (RI), que respectivement une ligne (Z39, Z77, Z115) des autres trames (RII,RIII,RIV) et respectivement 7 octets d'une ligne supplémentaire (Z20,Z58,Z98,Z141) de chaque trame (RI à RIV) sont disponibles pour des tâches particulières.

3. Procédé suivant la revendication 2, caractérisé par le fait que lors de l'insertion de 4 blocs de données de sous-répartition, qui correspondent à des containers virtuels (VC-31), 3 octets en un emplacement prédéterminé de façon fixe de chaque trame (RI à RIV) (Z20, Z58,Z96,Z134; S8,S9,S10) reçoivent les pointeurs (H1,H2,H3).

4. Procédé suivant la revendication 2, caractérisé par le fait que lors de l'insertion de blocs de données de sous-répartition TU-12, TU-22, TUG-22, TUG-31, on n'utilise pas les lignes supplémentaires (Z20,Z58,Z96,Z134) de chaque trame pour la transmission de données utiles.

5. Procédé suivant la revendication 4, caractérisé par le fait que dans le cas de l'insertion de blocs de données de sous-répartition TU-22, TUG-22, TUG-31 ou TU-12, on utilise on utilise une ligne de chaque trame (RI à RIV) pour la transmission des pointeurs respectivement associés par colonne et ayant une longueur de 4 octets (V1,V2,V3, V4), et que la transmission des blocs de transmission de données de sous-répartition s'effectue par transmission d'une colonne (V1,V2,...) ou de plusieurs colonnes d'une super-trame (S1 + S5 + S9 + S13).

6. Procédé suivant la revendication 4, caractérisé par le fait que, dans le cas de la transmission de blocs de données de sous-répartition TUG-22, qui contiennent chacun 5 x TU-11, une ligne et quatre octets d'une autre ligne de chaque trame (RI à RIV) sont prévus pour l'insertion des pointeurs.

7. Procédé suivant la revendication 4, caractérisé par le fait que lors de l'insertion de cinq blocs de données de sous-répartition TUG-21, on met les bits d'informations d'une colonne (S1) à une valeur fixe (F).

8. Procédé d'interconnexion de signaux multiplex par l'intermédiaire de sous-répartiteurs, à l'aide d'un format de trame constant, caractérisé par le fait
que l'on convertit des blocs de données de plans différents de multiplexage en des blocs de données de sous-répartition (TU-12, TU-11, TU-21, TU-32, TUG-32),
on introduit les blocs de données de sous-répartition dans une super-trame fixe (RM 1,5), qui comprend (selon une représentation bidimensionnelle) 116 lignes comportant chacune 28 colonnes, dans le cas de la hiérarchie à 1,5 Mbits/s et a une fréquence de trame constante,
la super-trame (R 1,5) est divisée en quatre trames (R1, R2, R3, R4),
on transmet le mot d'identification de trame dans la première ligne (Z1) de la première trame (R1),
respectivement une ligne (Z30,Z59,Z88) des autres trames (R2,R3,R4) est disponible pour des tâches particulières,
il est prévu des créneaux temporels fixes pour recevoir des pointeurs (H1,H2,H3,...; V1,V2,V3,...), qui fixent le début des blocs de données de sous-répartition, et
on comprend, par bourrage, des écarts en fréquence entre des signaux de données externes et la super-trame (RM).

9. Procédé suivant la revendication 8, caractérisé par le fait que lors de l'insertion de blocs de données de sous-répartition, 1 x TUG-32, 7 x TUG-21 (ou à cet effet trois TUG-12) ou 28 x TU-11, on n'utilise pas une ligne supplémentaire (Z15, Z44, Z73, Z102) de chaque trame (R1 à R4) pour la transmission d'informations.

10. Procédé suivant la revendication 9, caractérisé par le fait que, lors de l'insertion de blocs de données de sous-répartition TU-32, on utilise 12 octets de la ligne supplémentaire (Z15, Z44, Z73, Z102) pour la transmission d'informations.
